# EUROPEAN PATENT SPECIFICATION

(11) **EP 2 782 390 B1**
(45) Date of publication and mention of the grant of the patent: **09.03.2016**
(21) Application number: 11878126.9
(22) Date of filing: 22.12.2011
(51) Int. Cl.: H04W 36/06, H04W 36/08, H04W 92/20, H04W 72/04, H04W 36/00

(54) **CELL HANDOVER METHOD AND BASE STATION**
VERFAHREN ZUM WEITERREICHEN ZWISCHEN ZELLEN UND BASISSTATION
PROCÉDÉ DE TRANSFERT INTERCELLULAIRE ET STATION DE BASE

(43) Date of publication of application: 24.09.2014
(73) Proprietor: Huawei Technologies Co., Ltd., Longgang District Shenzhen, Guangdong 518129 (CN)
(72) Inventor: WANG, Zhifeng, Shenzhen Guangdong 518129 (CN)
(74) Representative: Pfenning, Meinig & Partner mbB
(86) International application number: PCT/CN2011/084448
(87) International publication number: WO 2013/091217

(56) References cited:
- EP-A2- 0 479 255
- CN-A- 101 043 716
- CN-A- 101 883 398
- CN-A- 101 932 016
- US-A1- 2010 227 617
- US-A1- 2011 021 198

## Description

### FIELD OF THE INVENTION

The present invention relates to the field of communications technologies, and in particular, to a cell handover method and a base station.

### BACKGROUND OF THE INVENTION

Development of the Third Generation Partnership Project (Third Generation Partnership Project) may provide a higher peak user throughput, a higher average user throughput, as well as a higher edge user throughput, bringing better data transmission experience for users. Meanwhile, a problem of interference among cells which provide communication services to the users and are under base stations is also generated along with the development.

Generally, intra-frequency networking is adopted in an LTE (long term evolution, long term evolution) communication system in the prior art. At a handover area of a bordering area of two neighboring cells, a source base station sends a signal with substantially the same strength as that sent by a target base station, thereby interfering with each other. During a handover process, inter-cell interference may cause decrease of a signal-interference ratio (namely, a ratio of signal strength to interference plus noise) of a source side. If two or more neighboring cells exist at the handover area, the interference may be more serious. An excessively low signal-interference ratio may lead to that the source base station fails to send a handover request.

With respect to the prior art, generally, an interference coordinate algorithm ICIC (Inter-Cell Interference Coordinate, inter-cell interference coordinate) is adopted to lower inter-cell interference and improve a success rate of handover. In the algorithm, all user terminals in a cell are grouped as an edge user and a center user according to positions where the user terminals are located. A base station adopts different transmission powers for the edge user and the center user. A relatively greater transmission power is adopted for the edge user and a relatively smaller transmission power is adopted for the center user. A user upon which handover occurs is determined as an edge user due to being located between two cells. The source base station uses a relatively greater transmission power to send a handover request. Moreover, at the same time frequency resource, each base station having a neighboring cell only schedules a center user and sends data by using a relatively smaller power. In this way, the interference imposed by the base station having the neighboring cell on the sending of the handover request by the source base station may be relatively smaller.

Although the base station having the neighboring cell sends data by using the relatively smaller power, interference still exists on the sending of the handover request by the source base station. If a plurality of base stations having neighboring cells exists, the interference on the sending of the handover request by the source base station may still be relatively serious. The inter-cell interference may lead to that the source base station fails to send the handover request and affect a success rate of the cell handover.
EP 0479255 A2 discloses a method of handover and route diversity in a mobile radio communication which is less time consuming and capable of improving the frequency spectrum utilization efficiency and securing the high quality of service regardless of the moving speed of the mobile station.

### SUMMARY OF THE INVENTION

Embodiments of the present invention provide a cell handover method and a base station, capable of avoiding inter-cell interference and improving a success rate of handover.

In order to achieve the foregoing objectives, the following technical solutions are adopted in the embodiments of the present invention.

An embodiment of the present invention, in one aspect, provides a cell handover method, including:
determining, by a source base station, to hand over a terminal from a cell of the source base station to a cell of a target base station;
acquiring, by the source base station, a wireless resource, where the wireless resource is to be used to carry a handover request sent to the terminal;
sending, by the source base station, a message to a neighboring base station, where the message includes the wireless resource, and the message is used to instruct the neighboring base station to avoid occupying the wireless resource; and
sending, by the source base station, the handover request carried by the wireless resource to the terminal, so as to hand over the terminal to the cell of the target base station;
where the wireless resource is a time frequency resource, the neighboring base station and the source base station have neighboring cells

An embodiment of the present invention, in another aspect, provides a base station, including:
a determination unit, configured to determine to hand over a terminal from a cell of a source base station to a cell of a target base station;
a processor, configured to acquire a wireless resource, where the wireless resource is to be used to carry a handover request sent to the terminal; and
a transmitter, configured to send a message to a neighboring base station, where the message includes the wireless resource, and the message is used to instruct the neighboring base station to avoid occupying the wireless resource;
where the transmitter is further configured to send the handover request carried by the wireless resource to the terminal, so as to hand over the terminal to the cell of the target base station;
where the wireless resource is a time frequency resource, the neighboring base station and the source base station have neighboring cells.

By using the cell handover method and the base station provided in the embodiments of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic flow chart of a cell handover method according to an embodiment of the present invention;
FIG. 2 is a schematic flow chart of another cell handover method according to an embodiment of the present invention;
FIG. 3 is a network schematic diagram of a cell handover scenario;
FIG. 4 is a schematic structural diagram of a time frequency resource according to an embodiment of the present invention;
FIG 5 is a schematic structural diagram of a time slot of a time frequency resource of a cell handover method according to an embodiment of the present invention; and
FIG. 6 is a schematic structural diagram of a base station according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

All technologies described in this text are mainly applied to a long term evolution LTE system. In this text, a base station is taken as an executing body of a method to describe all aspects involved in the method.

The base station (for example, an access point) may refer to a device in communication with a wireless terminal via one or more sectors at an over-the-air interface in an access network. The base station may be configured to perform conversion between a received over-the-air frame and an IP packet and serves as a router between the wireless terminal and a rest portion of the access network, where the rest portion of the access network may include an Internet protocol (IP) network. The base station may also coordinate attribute management of an over-the-air interface. In the LTE system, the base station may be an evolutional base station (a NodeB, an eNB, an e-NodeB, or an evolutional Node B) in the LTE.

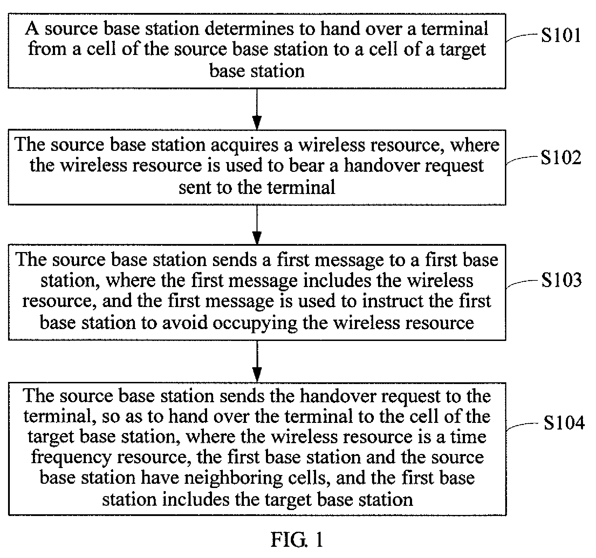

A cell handover method provided in an embodiment of the present invention, as shown in FIG 1, includes the following steps.

S101: A source base station determines to hand over a terminal from a cell of the source base station to a cell of a target base station.

For example, the source base station may receive a measurement report reported by the terminal, and determine to hand over the terminal from the cell of the source base station to the cell of the target base station according to the measurement report.

S102: The source base station acquires a wireless resource, where the wireless resource is used to carry a handover request sent to the terminal.

S103: The source base station sends a first message to a first base station, where the first message includes the wireless resource, and the first message is used to instruct the first base station to avoid occupying the wireless resource.

S104: The source base station sends the handover request to the terminal, so as to hand over the terminal to the cell of the target base station.

In this embodiment, the wireless resource is a time frequency resource.

Specifically, the time frequency resource may include a sending time interval and a resource block for sending the handover request. According to a bit quantity and/or an adopted modulation & code scheme MCS of the handover request, the source base station may obtain the resource block for sending the handover request.

Further, the first base station and the source base station have neighboring cells, and the first base station includes the target base station. For example, at least one cell controlled by the first base station and at least one cell controlled by the source base station are neighboring cells to each other. The number of first base stations may be one or more. For example, when the number of the first base stations is one, the first base station may be the target base station.

By using the cell handover method provided in the embodiment of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover.

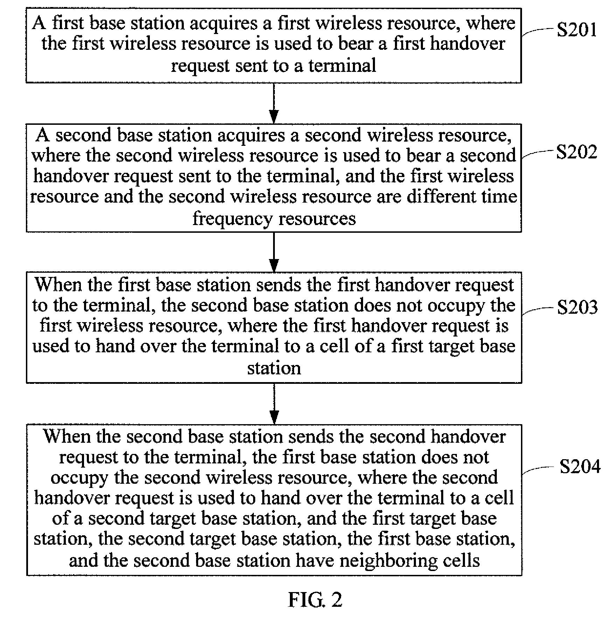

A cell handover method provided in an embodiment of the present invention, as shown in FIG 2, includes the following steps.

S201: A first base station acquires a first wireless resource, where the first wireless resource is used to carry a first handover request sent to a terminal.

S202: A second base station acquires a second wireless resource, where the second wireless resource is used to carry a second handover request sent to the terminal, and the first wireless resource and the second wireless resource are different time frequency resources.

Specifically, a time frequency resource may include a sending time interval and a resource block for sending a handover request. According to a bit quantity and/or an adopted modulation & code scheme MCS of the handover request, a source base station may obtain the resource block for sending the handover request.

S203: When the first base station sends the first handover request to the terminal, the second base station does not occupy the first wireless resource, where the first handover request is used to hand over the terminal to a cell of a first target base station.

S204: When the second base station sends the second handover request to the terminal, the first base station does not occupy the second wireless resource, where the second handover request is used to hand over the terminal to a cell of a second target base station.

In this embodiment, the first target base station, the second target base station, the first base station, and the second base station have neighboring cells.

Further, the first target base station and the second base station may be the same base station, or the second target base station and the first base station may be the same base station.

Further, the first target base station and the second target base station may be the same base station. For example, the first target base station and the second target base station may be the same macro base station or the same micro base station. For another example, the first target base station and the second target base station are one base station physically.

By using the cell handover method provided in the embodiment of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover. In addition, because the handover request is sent by adopting a preset time frequency resource, a real-time inter-cell notification is not needed, thereby saving resources and improving efficiency of command sending.

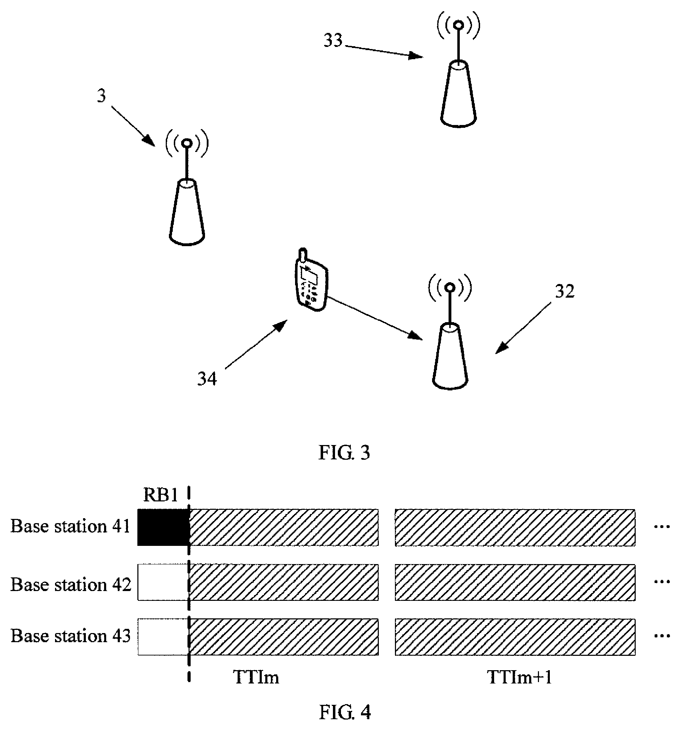

In an embodiment of the present invention, three base stations are taken for example to make the specific description of the cell handover method provided in the embodiment of the present invention. As shown in FIG 3, there are a source base station 31, a target base station 32, and a neighboring base station 33, and a terminal 34 is located at a cell which is covered by the source base station 31, and is handed over from the source base station 31 to the target base station 32. Each of the target base station 32 and the neighboring base station 33 has a neighboring cell with the source base station 31.

The source base station 31 receives a measurement report reported by the terminal 34, and according to the measurement report, determines to hand over the terminal 34 from the cell of the source base station 31 to a cell of the target base station 32. Specifically, RSRPs (Reference Signal Received Powers, reference signal received powers) of the source base station 31, the target base station 32, and the neighboring base station 33 may be recorded in the measurement report. At this time, the terminal 34 is located at an edge of the cell which is covered by the source base station 31, and is moving in a direction (a direction indicated by an arrow in the drawing) to the target base station 32. The source base station 31 determines, according to the measurement report, whether the terminal 34 needs cell handover.

In this embodiment, when the terminal 34 continuously moves toward the target base station 32 until an RSRP of the target base station 32 is 3 dB higher than an RSRP of the source base station 31 in the record of the measurement report, the source base station 31 determines that the terminal 34 needs cell handover.

The source base station 31 acquires a wireless resource, where the wireless resource is used to carry a handover request sent to the terminal 34. Specifically, the source base station 31 determines, according to the time and frequency that the handover request needs to occupy, the wireless resource for carrying the handover request sent to the terminal 34. The wireless resource includes a sending time interval and a resource block for sending the handover request. The resource block for sending the handover request may be obtained according to a bit quantity and/or an adopted modulation & code scheme MCS of the handover request.

The source base station 31 sends a first message to the target base station 32 and the neighboring base station 33. The first message includes the wireless resource. The first message is used to instruct the target base station 32 and the neighboring base station 33 to avoid occupying the wireless resource. Specifically, the source base station 31 may send, via an X2 interface, the first message to the target base station 32 and the neighboring base station 33, and may notify the wireless resource to the target base station 32 and the neighboring base station 33.

For example, the first message may be a load message sent by the source base station 31 via the X2 interface to the target base station 32 and the neighboring base station 33. The source base station 31 may indicate, by modifying an RNTP (relative narrowband tx power, relative narrowband tx power) information element in the message, a wireless resource occupied by sending of a handover request. The target base station 32 and the neighboring base station 33 each may determine, according to the received load message, the wireless resource occupied by the sending of the handover request by the source base station 31.

The source base station 31 sends the handover request to the terminal 34, so as to hand over the terminal 34 to the cell of the target base station 32.

Specifically, the target base station 32 and the neighboring base station 33 may not send data on the time frequency resource for sending the handover request to the terminal 34 by the source base station 31. As shown in FIG 4, within a time interval TTI (transmission time interval, transmission time interval) m for sending the handover request by the source base station 31, a frequency resource block RB (resource block, resource block) 1 practically used by the source base station 31 for sending the handover request is a black portion in the drawing. At the same RB 1 within the same TTIm, the target base station 32 and the neighboring base station 33 do not send data (a blank portion shown in the drawing). At another RB within the same TTIm, or at any RB of another TTI, the base stations 31, 32, and 33 may all send information.

Further, the source base station 31 may send a handover request to each of terminals with the same power, where the terminals refers to all terminals, including a center user terminal and an edge user terminal, within the cell of the base station 31.

The source base station 31 may also send other signaling than the handover request to the terminal 34 on the time frequency resource. The other signaling may include signaling, such as an access command, a re-establishment connection command, or configuration information, which is apt to be affected by interference among neighboring cells.

It should be noted that, a time interval unit of sending the handover request is a TTI. The TTI is a minimum time interval unit for sending information in an LTE system and has a length of 1 ms. A frequency unit of sending the handover request is a frequency resource block RB. The RB is a minimum frequency unit for sending information in the LTE system and has a length of 180 kHz.

The following describes, through examples, the influence of a system overhead, which is caused by the handover method provided in the embodiment of the present invention, on a throughput rate. Generally, a handover threshold is configured as ranging from 3 dB to 5 dB. The handover threshold being 3 dB is taken as an example, that is, handover is performed when an RSRP of a target base station is 3 dB higher than an RSRP of a source base station. Because a handover trigger delay exists, during practical handover, the RSRP of the target base station is more than 3 dB higher than the RSRP of the source base station. If neighboring cell interference exists, only a 0-order can be adopted in an MCS (Modulation & Code Scheme, modulation & code scheme), and a corresponding demodulation threshold is -4 dB. If no neighboring cell interference exists, a signal-interference ratio of a source side is decided by the RSRP. In the embodiment of the present invention, the signal-interference ratio may exceed 10 dB, and is conservatively estimated as 3 dB herein. If the signal-interference ratio is 3 dB, the 5-order may be adopted in the MCS, and the corresponding demodulation threshold is 3 dB.

Compared with the prior art, interference coordinate is performed among cells by using the handover method provided in the embodiment of the present invention. The spectral efficiency after the interference coordination exceeds three times of the spectral efficiency before coordination, that is, the number of occupied RBs is less than one third of the number of occupied RBs before coordination. In this way, even if neither of two neighboring base stations sends data on a time frequency resource block, entire spectral efficiency is still high. Therefore, the handover method provided in the embodiment of the present invention may not lower a throughput rate of a system.

By using the cell handover method provided in the embodiment of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover.

In an embodiment of the present invention, still three base stations are taken for example to make the specific description of the cell handover method with reference to FIG 4, where base stations 31, 32, and 33 have neighboring cells.

The base station 31 acquires a first wireless resource, where the first wireless resource is used to carry a first handover request sent to a terminal 34. The base station 32 acquires a second wireless resource, where the second wireless resource is used to carry a second handover request sent to the terminal 34, and the first wireless resource and the second wireless resource are different time frequency resources. Other base stations may be deduced by analogy.

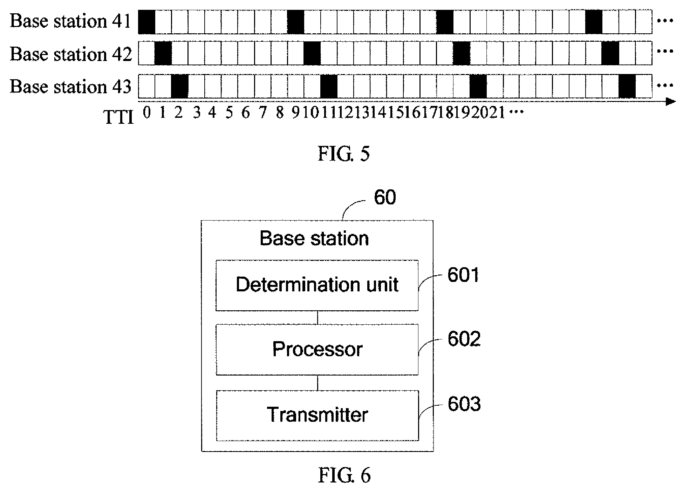

For example, as shown in FIG 5, within a time segment, it is ruled that the base station 31 can only send a handover request within a TTI with a number such as 0, 9, 18, and so on. Meanwhile, it may be ruled that the base station 32 can only send a handover request within a TTI with a number such as 1, 10, 19, and so on, and it is ruled that the base station 33 can only send a handover request within a TTI with a number such as 2, 11, 20, and so on.

The base station 31 receives a measurement report reported by the terminal 34. The measurement report records RSRPs of the source base stations 31, 32, and 33. At this time, the terminal 34 is located at an edge of a cell of the base station 31 and is moving toward a cell of the base station 32. The base station 31 determines whether the terminal 34 needs cell handover according to the measurement report. When the terminal 34 continuously moves toward the cell of the base station 32 until an RSRP of the base station 32 is 3 dB higher than an RSRP of the base station 31 in the record of the measurement report, the base station 31 determines that the terminal 34 needs cell handover.

When the base station 31 sends the first handover request to the terminal 34, the base stations 32 and 33 do not occupy the first wireless resource. The first handover request is used to hand over the terminal to a cell of a first target base station. When the base station 32 sends the second handover request to the terminal 34, the base stations 31 and 33 do not occupy the second wireless resource. The second handover request is used to hand over the terminal to a cell of a second target base station. Other base stations may be deduced by analogy.

Specifically, the base station 31 sends a handover request within a TTI with a number such as 0, 9, 18, and so on, so that the terminal 34 is handed over to a cell of the base station 32. The base stations 32 and 33 do not send data on the time frequency resource. As shown in FIG 4, within a TTIm for sending the handover request, the RB1 practically used by the base station 31 for sending the handover request is the black portion in the drawing. Within the same RB1 of the same TTIm, the base stations 32 and 33 do not send data (a blank portion shown in the drawing). At another RB within the same TTIm, or at any RB of a TTI with a number except 0, 9, 18, and so on, the base stations 31, 32, and 33 may all send information.

By using the cell handover method provided in the embodiment of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover. In addition, because the handover request is sent by adopting a preset time frequency resource, a real-time inter-cell notification is not needed, thereby saving resources and improving efficiency of command sending.

A base station 60 provided in an embodiment of the present invention corresponds to the method embodiments, and may be used in all steps of the method embodiments. The detailed steps of the base station 60 are described in the method embodiments, and are not described in detail again herein. As shown in FIG 6, the base station 60 includes:
a determination unit 601, configured to hand over a terminal from a cell of a source base station to a cell of a target base station;
a processor 602, configured to acquire a wireless resource, where the wireless resource is used to carry a handover request sent to the terminal; and
a transmitter 603, configured to send a first message to a first base station, where the first message includes the wireless resource, and the first message is used to instruct the first base station to avoid occupying the wireless resource.

In this embodiment, the transmitter 603 is further configured to send a handover request to the terminal, so as to hand over the terminal to a cell of a target base station.

In this embodiment, the wireless resource is a time frequency resource, the first base station and the source base station have neighboring cells, and the first base station includes the target base station.

Further, the time frequency resource may include a sending time interval and a resource block for sending the handover request.

Further, the determination unit 601 may also configured to:
receive a measurement report reported by the terminal, and determine to hand over the terminal from the cell of the source base station to the cell of the target base station according to the measurement report.

The base station provided in the embodiment of the present invention may execute actions in the method embodiments. When it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover.

A communication system provided in an embodiment of the present invention includes: a first base station and a second base station.

The first base station is configured to acquire a first wireless resource. The first wireless resource is used to carry a first handover request sent to a terminal.

The second base station is configured to acquire a second wireless resource. The second wireless resource is used to carry a second handover request sent to the terminal. The first wireless resource and the second wireless resource are different time frequency resources.

When the first base station sends the first handover request to the terminal, the second base station does not occupy the first wireless resource. The first handover request is used to hand over the terminal to a cell of a first target base station.

When the second base station sends the second handover request to the terminal, the first base station does not occupy the second wireless resource. The second handover request is used to hand over the terminal to a cell of a second target base station.

In this embodiment, the first target base station, the second target base station, the first base station, and the second base station have neighboring cells. A time frequency resource may include a sending time interval and a resource block for sending a handover request.

Further, the first target base station and the second base station may be the same base station, or the second target base station and the first base station may be the same base station.

Further, the first target base station and the second target base station may be the same base station. For example, the first target base station and the second target base station may be the same macro base station or the same micro base station. For another example, the first target base station and the second target base station are one base station physically.

By using the communication system provided in the embodiment of the present invention, when it is necessary to perform cell handover, a source base station sends a handover request to a terminal, so that the terminal is handed over to a cell of a target base station. Meanwhile, a base station having a neighboring cell does not occupy a wireless resource for carrying the handover request. The resource is a time frequency resource. In this way, because only the source base station sends the handover request on the time frequency resource for sending the handover request and the base station having the neighboring cell does not send data, inter-cell interference is avoided on the time frequency resource, thereby ensuring a success rate of the sending of the handover request and further improving a success rate of the handover.

Persons of ordinary skill in the art should understand that all or part of the steps of the methods in the embodiments may be implemented by a program instructing relevant hardware. The program may be stored in a computer readable storage medium. When the program is run, the steps of the methods in the embodiments are performed. The storage medium may be any medium capable of storing program codes, such as ROM, RAM, a magnetic disk, or an optical disk.

The foregoing description is merely about specific embodiments of the present invention, but is not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A cell handover method, comprising:
determining (S101), by a source base station, to hand over a terminal from a cell of the source base station to a cell of a target base station;
acquiring (S102), by the source base station, a wireless resource, wherein the wireless resource is to be used to carry a handover request sent to the terminal;
sending (S103), by the source base station, a message to a neighboring base station, wherein the message comprises the wireless resource, and the message is used to instruct the neighboring base station to avoid occupying the wireless resource; and
sending (S104), by the source base station, the handover request carried by the wireless resource to the terminal, so as to hand over the terminal to the cell of the target base station;
wherein the wireless resource is a time frequency resource, the neighboring base station and the source base station have neighboring cells.

2. The method according to claim 1, wherein the time frequency resource comprises:
a sending time interval and a resource block for sending the handover request.

3. The method according to claim 2, further comprising:
obtaining, by the source base station, the resource block for sending the handover request, according to a bit quantity and/or an adopted modulation & code scheme MCS of the handover request.

4. The method according to any one of claims 1 to 3, wherein the determining, by the source base station, to hand over the terminal from the cell of the source base station to the cell of the target base station comprises:
receiving, by the source base station, a measurement report reported by the terminal, and determining to hand over the terminal from the cell of the source base station to the cell of the target base station according to the measurement report.

5. A base station, comprising:
a determination unit (601), configured to determine to hand over a terminal from a cell of a source base station to a cell of a target base station;
a processor (602), configured to acquire a wireless resource, wherein the wireless resource is used to carry a handover request sent to the terminal; and
a transmitter (603), configured to send a message to a neighboring base station, wherein the message comprises the wireless resource, and the message is used to instruct the neighboring base station to avoid occupying the wireless resource;
wherein the transmitter is further configured to send the handover request carried by the wireless resource to the terminal, so as to hand over the terminal to the cell of the target base station;
wherein the wireless resource is a time frequency resource, the neighboring base station and the source base station have neighboring cells.

6. The base station according to claim 5, wherein the time frequency resource comprises:
a sending time interval and a resource block for sending the handover request.

7. The base station according to claim 5 or 6, wherein the determination unit is further configured to:
receive a measurement report reported by the terminal, and determine to hand over the terminal from the cell of the source base station to the cell of the target base station according to the measurement report.

## Patentansprüche

1. Zellenübergabeverfahren, das Folgendes umfasst:
Bestimmen (S101), durch eine Ursprungsbasisstation, ein Endgerät von einer Zelle der Ursprungsbasisstation zu einer Zelle einer Zielbasisstation zu übergeben;
Erfassen (S102), durch die Ursprungsbasisstation, eines drahtlosen Betriebsmittels, wobei das drahtlose Betriebsmittel verwendet werden soll, um eine Übergabeanforderung, die zu dem Endgerät gesendet wird, zu führen;
Senden (S103), durch die Ursprungsbasisstation, einer Nachricht zu einer Nachbarbasisstation, wobei die Nachricht das drahtlose Betriebsmittel umfasst und die Nachricht verwendet wird, um die Nachbarbasisstation anzuweisen, das Belegen des drahtlosen Betriebsmittels zu vermeiden; und
Senden (S104), durch die Ursprungsbasisstation, der Übergabeanforderung, die durch das drahtlose Betriebsmittel geführt wird, zu dem Endgerät, um das Endgerät zu der Zelle der Zielbasisstation zu übergeben;
wobei das drahtlose Betriebsmittel ein Zeit-Frequenz-Betriebsmittel ist und die Nachbarbasisstation und die Ursprungsbasisstation benachbarte Zellen aufweisen.

2. Verfahren nach Anspruch 1, wobei das Zeit-Frequenz-Betriebsmittel Folgendes umfasst:
ein Sendezeitintervall und einen Betriebsmittelblock zum Senden der Übergabeanforderung.

3. Verfahren nach Anspruch 2, das ferner Folgendes umfasst:
Erhalten, durch die Ursprungsbasisstation, des Betriebsmittelblocks zum Senden der Übergabeanforderung gemäß einer Bitmenge und/oder einem eingesetzten Modulations- und Codeschemas, MCS, der Übergabeanforderung.

4. Verfahren nach einem der Ansprüche 1 bis 3, wobei das Bestimmen, durch die Ursprungsbasisstation, das Endgerät von der Zelle der Ursprungsbasisstation zu der Zelle der Zielbasisstation zu übergeben, Folgendes umfasst:
Empfangen, durch die Ursprungsbasisstation, eines Messberichts, der durch das Endgerät berichtet wird, und Bestimmen, das Endgerät von der Zelle der Ursprungsbasisstation zu der Zelle der Zielbasisstation zu übergeben, gemäß dem Messbericht.

5. Basisstation, die Folgendes umfasst:
eine Bestimmungseinheit (601), die konfiguriert ist, zu bestimmen, ein Endgerät von einer Zelle einer Ursprungsbasisstation zu einer Zelle einer Zielbasisstation zu übergeben;
einen Prozessor (602), der konfiguriert ist, ein drahtloses Betriebsmittel zu erfassen, wobei das drahtlose Betriebsmittel verwendet wird, um eine Übergabeanforderung, die zu dem Endgerät gesendet wird, zu führen; und
einen Sender (603), der konfiguriert ist, eine Nachricht zu einer Nachbarbasisstation zu senden, wobei die Nachricht das drahtlose Betriebsmittel umfasst und die Nachricht verwendet wird, um die Nachbarbasisstation anzuweisen, das Belegen des drahtlosen Betriebsmittels zu vermeiden;
wobei der Sender ferner konfiguriert ist, die Übergabeanforderung, die durch das drahtlose Betriebsmittel geführt ist, zu dem Endgerät zu senden, um das Endgerät zu der Zelle der Zielbasisstation zu übergeben;
wobei das drahtlose Betriebsmittel ein Zeit-Frequenz-Betriebsmittel ist und die Nachbarbasisstation und die Ursprungsbasisstation benachbarte Zellen aufweisen.

6. Basisstation nach Anspruch 5, wobei das Zeit-Frequenz-Betriebsmittel Folgendes umfasst:
ein Sendezeitintervall und einen Betriebsmittelblock zum Senden der Übergabeanforderung.

7. Basisstation nach Anspruch 5 oder 6, wobei die Bestimmungseinheit ferner konfiguriert ist:
einen Messbericht, der durch das Endgerät berichtet wird, zu empfangen und zu bestimmen, das Endgerät von der Zelle der Ursprungsbasisstation zu der Zelle der Zielbasisstation zu übergeben, gemäß dem Messbericht.

## Revendications

1. Procédé de transfert cellulaire, comprenant:
la détermination (S101), par une station de base source, qu'il convient de transférer un terminal d'une cellule de la station de base source à une cellule d'une station de base destinataire ;
l'acquisition (S102), par la station de base source, d'une ressource sans fil, la ressource sans fil servant à acheminer une requête de transfert envoyée au terminal ;
l'envoi (S103), par la station de base source, d'un message à une station de base voisine, le message comprenant la ressource sans fil, et le message servant à donner l'instruction à la station de base voisine d'éviter d'occuper la ressource sans fil ; et
l'envoi (S 104), par la station de base source, de la requête de transfert acheminée par la ressource sans fil au terminal, de manière à transférer le terminal à la cellule de la station de base destinataire ;
dans lequel la ressource sans fil est une ressource de fréquence de temps, la station de base voisine et la station de base source ont des cellules voisines.

2. Procédé selon la revendication 1, dans lequel la ressource de fréquence de temps comprend :
un intervalle de temps d'envoi et un bloc de ressource pour envoyer la requête de transfert.

3. Procédé selon la revendication 2, comprenant en outre:
l'obtention, par la station de base source, du bloc de ressource pour envoyer la requête de transfert, en fonction d'une quantité de bits et/ou d'un plan de modulation et de code MCS adopté de la requête de transfert.

4. Procédé selon l'une quelconque des revendications 1 à 3, dans lequel la détermination, par la station de base source, qu'il convient de transférer le terminal de la cellule de la station de base source à la cellule de la station de base destinataire comprend :
la réception, par la station de base source, d'un rapport de mesure produit par le terminal et la détermination qu'il convient de transférer le terminal de la cellule de la station de base source à la cellule de la station de base destinataire en fonction du rapport de mesure.

5. Station de base, comprenant:
une unité de détermination (601), configurée pour déterminer qu'il convient de transférer un terminal d'une cellule d'une station de base source à une cellule d'une station de base destinataire ;
un processeur (602), configuré pour acquérir une ressource sans fil, la ressource sans fil servant à acheminer une requête de transfert envoyée au terminal ; et
un émetteur (603), configuré pour envoyer un message à une station de base voisine, le message comprenant la ressource sans fil, et le message servant à donner l'instruction à la station de base voisine d'éviter d'occuper la ressource sans fil ;
dans laquelle l'émetteur est configuré en outre pour envoyer la requête de transfert acheminée par la ressource sans fil au terminal, de manière à transférer le terminal à la cellule de la station de base destinataire ;
dans laquelle la ressource sans fil est une ressource de fréquence de temps, la station de base voisine et la station de base source ont des cellules voisines.

6. Station de base selon la revendication 5, dans laquelle la ressource de fréquence de temps comprend :
un intervalle de temps d'envoi et un bloc de ressource pour envoyer la requête de transfert.

7. Station de base selon la revendication 5 ou 6, dans laquelle l'unité de détermination est configurée en outre pour :
recevoir un rapport de mesure produit par le terminal, et déterminer qu'il convient de transférer le terminal de la cellule de la station de base source à la cellule de la station de base destinataire en fonction du rapport de mesure.
